# EUROPEAN PATENT SPECIFICATION

(11) **EP 2 174 479 B1**
(45) Date of publication and mention of the grant of the patent: **20.06.2012**
(21) Application number: 08776365.2
(22) Date of filing: 16.07.2008
(51) Int. Cl.: H04L 29/14, H04L 29/12, H04L 29/08

(54) **SYSTEM AND METHOD FOR MANAGING APPLICATION SERVER RESPONSES IN IP MULTIMEDIA SUBSYSTEM**
SYSTEM UND VERFAHREN ZUR VERWALTUNG VON ANWENDUNGSSERVERANTWORTEN IN DEM IP-MULTIMEDIA-SUBSYSTEM
SYSTÈME ET PROCÉDÉ POUR GÉRER DES RÉPONSES DE SERVEUR D'APPLICATIONS DANS LE SOUS-SYSTÈME MULTIMÉDIA IP

(30) Priority: 20.07.2007 US 780639
(43) Date of publication of application: 14.04.2010
(73) Proprietor: Telefonaktiebolaget LM Ericsson (publ), 164 83 Stockholm (SE)
(72) Inventor: PRESSLEY, Todd, Superior, CO 80027 (US); SCHNEYER, Sean, Kendall, The Colony, TX 75056 (US)
(74) Representative: HOFFMANN EITLE
(86) International application number: PCT/IB2008/001864
(87) International publication number: WO 2009/013585

(56) References cited:
- US-A1- 2005 213 606
- US-A1- 2007 005 712

## Description

### TECHNICAL FIELD

This invention relates to Internet Protocol Multimedia Subsystem (IMS) and more particularly to enhanced response handling on IMS networks.

### BACKGROUND

The IP Multimedia Subsystem (IMS), as defined by 3GPP, merges telephony and Internet technology by providing an all-IP based architecture for the telecommunications industry. The IMS is based on the Session Initiation Protocol (SIP) and makes heavy use of the protocols defined within the Internet Engineering Task Force (IETF). The system offers a network of servers and databases that assist a user agent with the task of establishing and managing sessions. IMS uses the term sessions because the connections between users are no longer limited to voice services (ie. a phone call). Sessions may be voice, video, text, or other services connecting two or more user agents together.

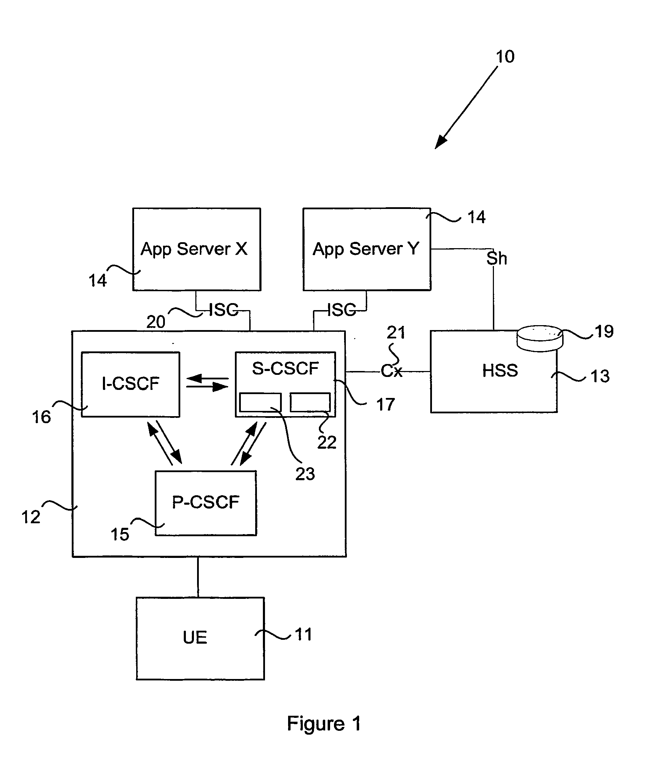

As shown in Figure 1, a typical IMS architecture 10 includes the User Equipment (UE) 11, several Call Session Control Functions (CSCF) shown collectively at 12, Home Subscriber Server (HSS) 13 and one or more Application Servers 14. The UE 11 is a device that contains the Session Initiation Protocol (SIP) User Agent (UA) and is able to initiate or terminate sessions. For example, the user device may be a wireless phone, computer, personal digital assistant, web enabled phone, or any suitable communications device.

The CSCFs 12 are responsible for managing the sessions including security and interconnect. There are three types of CSCFs. The Proxy (P) CSCF 15 sits at the edge of the network and is the entry point for the UE 11 into the IMS core. The Interrogating (I) CSCF 16 serves as the entry point into the network for peering networks and also acts as the lookup function for finding the appropriate serving node for a subscriber. The Serving (S) CSCF 17 is responsible for authenticating the UE 11 and managing ongoing sessions for the UE 11 including invocation of applications. By way of example, the S-CSCF 17 is shown featuring a processor 22 working in conjunction with a memory 23. The other CSCFs will have equivalent features which are omitted for clarity.

The HSS 13 stores the relevant user data including authentication information and service data in at least one database 19. As part of the user profile, initial Filter Criteria (iFC) are defined to indicate which application servers are to be invoked based on information in the signaling plane.

The S-CSCF 17 communicates with the HSS 13 across a Cx interface 21 in order to retrieve the UE authentication information. After the user has been authenticated, the S-CSCF 17 again communicates with the HSS 13, this time to retrieve the user profile. The user profile specifies the services that a user has subscribed to and which application servers are to be invoked for those services.

The Application Servers 14 are invoked based on the iFCs that are stored in the user profile. The S-CSCF will pass signaling onto an Application Server 14 across an IMS Service Control (ISC) interface 20 if the criteria defined in the iFC are met. Once invoked, the Application Server 14 can now take part in the session and provide additional capabilities. This may include familiar features such as Call Forwarding or newly defined services such as Push-to-Talk over Cellular (PoC). It is possible to invoke multiple application servers as part of the same session.

To gain access to the IMS network 10, a UE 11 is required to register which authenticates the user with the network, setting up a security association. After a UE 11 has registered, it can then initiate a session. Whilst such a registration process is typical of the prior art, the registration process is not essential to the present invention. The present invention should be considered independent of the registration process, and may take into account any changes to the registration process, as defined by the 3GPP specification, as may periodically occur.

The current schema defined by 3GPP TS 29.228 (Version 7.6.0) is partly replicated as follows :

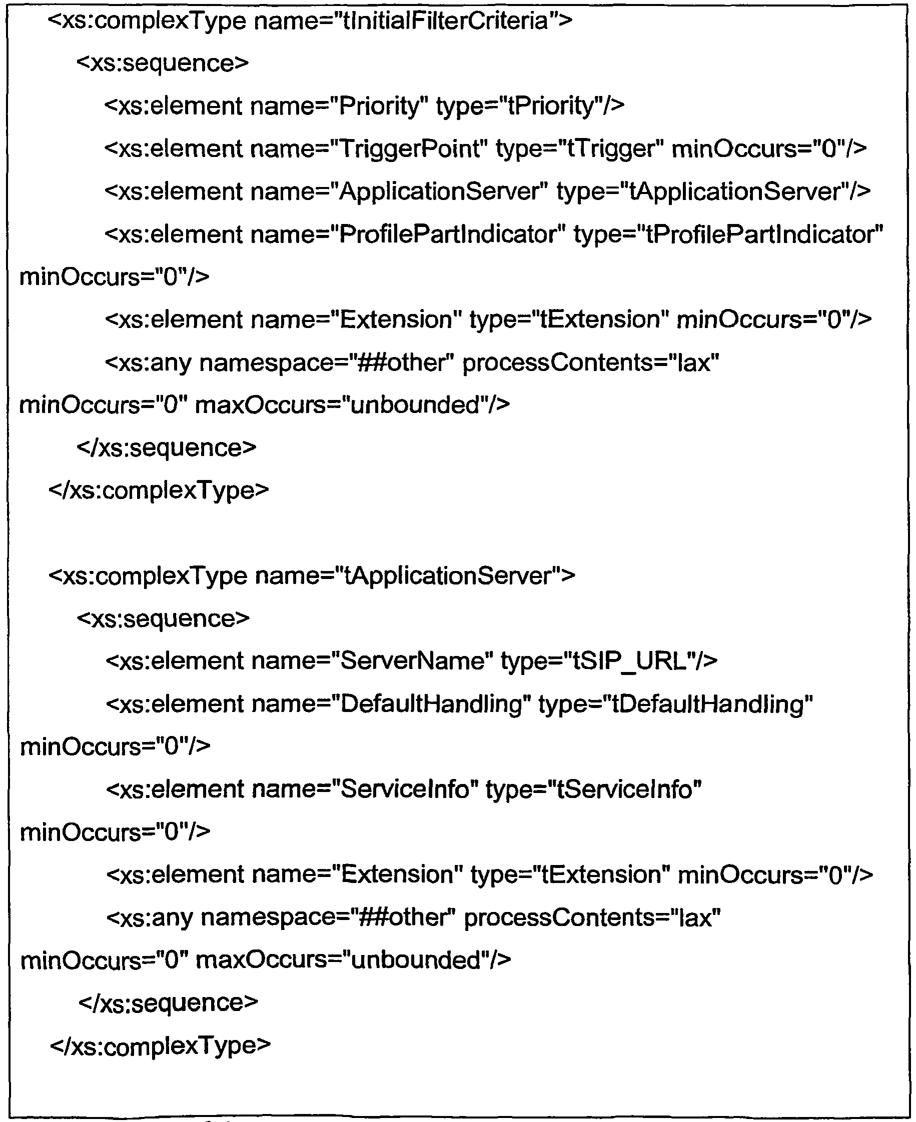

As part of the user profile, the iFC defines the information related to the Application Server. Within the Application Server definition (name="tApplicationServer") is the Default Handling. As defined in 3GPP TS 29.228 (Version 7.6.0), the default handling only applies to a 408 (Request Timeout) response or a 5xx response from the Application Server. Other error codes are not handled. Additionally, the prior art only allows a default handling to be defined for all of these error responses, it does not provide for different handling per error response.

US 2007/0005712 Al discloses improving control device behavior in error situations where an error response is received from an application. In case a response message received from an application for a communication request is evaluated as an error message by the control device, control of the communication request can be continued on the basis of service-specific data.

US 2005/0213606 Al discloses a triggering method for IP multimedia service control. The triggering method comprises examining a SIP response message received by a S-CSCF according to a set of response Filter Criteria (rFC), and subsequently recording a corresponding SIP request message and re-issuing the SIP request message to an application server designated by the rFC if the SIP response message matches the Service Point Triggers (SPTs) of the rFC. The S-CSCF examines the SPTs of the rFC one by one according to their indicated priority. The rFC scheme is useful when the application servers are triggered according to the SIP response message, and is compatible with the iFC scheme. The rFC scheme improves the efficiency for call establishment as well as improving the flexibility of the S-CSCF.

### SUMMARY

It is an object of the present invention to provide a system, method and computer readable medium that handles additional response codes and allows the flexibility to determine the handling on a per response basis.

In some embodiments, an expanded range of response codes are given specific handling at the S-CSCF from interactions with Application Servers. The invention also allows for greater granularity in the handling of these response codes by allowing the behavior to vary per response code, rather than using a single "default handling". The handling is defined as part of the initial Filter Criteria (iFC) stored in the user profile on the HSS.

According to a first aspect of the invention there is provided an Internet Protocol Multimedia Subsystem as set out in Claim 1.

According to a second aspect of the invention there is provided a method of managing application server responses in an internet protocol multimedia subsystem as set out in Claim 6.

### BRIEF DESCRIPTION OF THE DRAWINGS

The invention will now be described by way of example only with reference to preferred embodiments and to the accompanying drawings in which:
FIG. 1 represents an schematic drawing of an IMS network;
FIGS. 2 and 3 represent flow diagrams for a UE registration on the network of FIG. 1;
FIGS. 4 and 5 represent flow diagrams for a session initiation of the UE;
FIG. 6 represents a flow diagram for response handling;
FIGS. 7 and 8 represent a call flow procedure for response handling with an extended handling range; and
FIG. 9 represents an electronic device for providing enhanced response handling.

### DETAILED DESCRIPTION

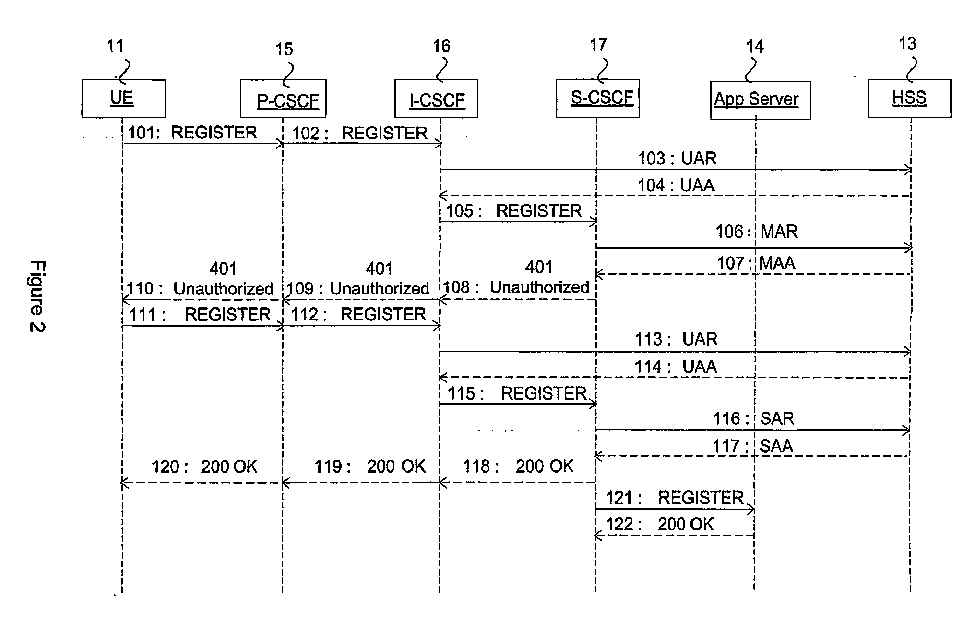

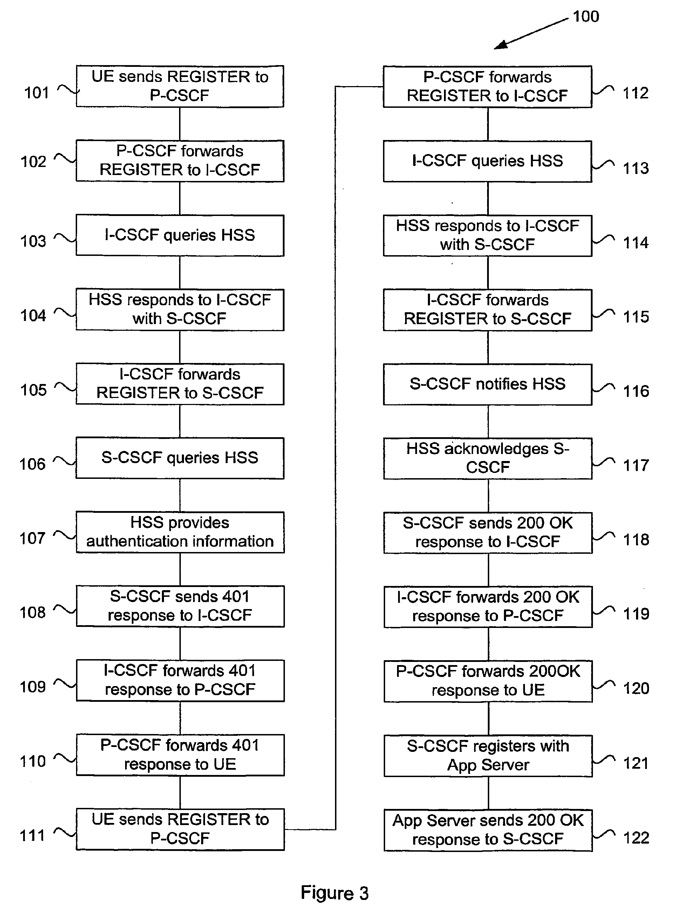

FIG. 2 shows a UE registration with the network in accordance with the prior art and includes a successful invocation of an application server based on the iFC in the user profile. FIG. 3 shows the corresponding flow chart 100. At step 101, the UE 11 sends a REGISTER request to the P-CSCF 15 to initiate the registration process. At step 102, the P-CSCF 15 forwards the REGISTER request to the I-CSCF 16. The I-CSCF 16 queries the HSS 13 with a User Authorization Request (UAR) to determine the S-CSCF 17 that will service this UE 11 (step 103). The HSS 13 responds to the I-CSCF 16 with a User Authorization Answer (UAA) including the information needed to determine the S-CSCF 17 that will service this UE 11 (step 104). The I-CSCF 16 forwards the REGISTER request to the appropriate S-CSCF 17 (step 105). The S-CSCF (17) queries the HSS 13 with a Multimedia Authorization Request (MAR) to retrieve the authentication information for this UE 11 (step 106). The HSS 13 responds with a Multimedia Authorization Answer (MAA) including the authentication information for this UE 11 (step 107). The S-CSCF 17 sends a 401 response back to the I-CSCF 16 to reject the REGISTER request but includes authentication vectors so that the UE 11 can authenticate (step 108). At step 109, the I-CSCF forwards the 401 response to the P-CSCF 15, which forwards the 401 response to the UE 11 (step 110).

The UE 11 uses the authentication information received in the 401 to continue the registration process by sending a REGISTER request to the P-CSCF 15 (step 111). At step 112, the P-CSCF 15 forwards the REGISTER request to the I-CSCF 16 which queries the HSS 13 with a UAR to determine the S-CSCF 17 that will service this UE 11 (step 113). The HSS 13 responds with a UAA to the I-CSCF 16 with the information needed to determine the S-CSCF 17 that will service this UE 11 (step 114). The I-CSCF 16 forwards the REGISTER request to the appropriate S-CSCF 17 (step 115). The S-CSCF 17 verifies the authentication information from the UE 11 and notifies the HSS 13, using a Server Assignment Request (SAR) that it will be servicing this UE 11 (step 116). At step 117, the HSS 13 acknowledges the assignment with a Serving Assignment Answer (SAA) and provides the User Profile. The S-CSCF 17 sends a 200 OK response back to the UE via the I-CSCF 16 (step 118). The I-CSCF 16 forwards the 200 OK response to the P-CSCF 15 (step 119). The P-CSCF 15 forwards the 200 OK response to the UE 11 (step 120). Based on initial Filter Criteria (iFC) for this user retrieved from the user profile, the S-CSCF 17 initiates a 3^{rd} Party Registration request towards the Application Server 14 (step 121). The Application Server 14 sends a 200 OK response back to the S-CSCF 17 (step 122).

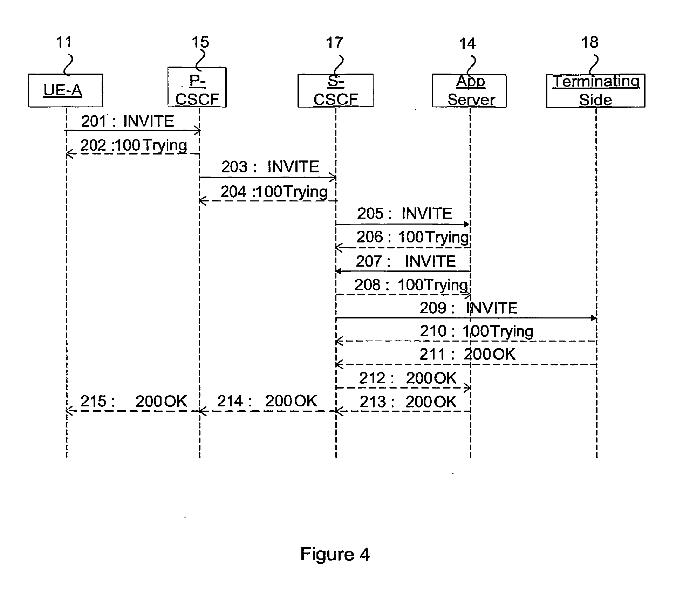

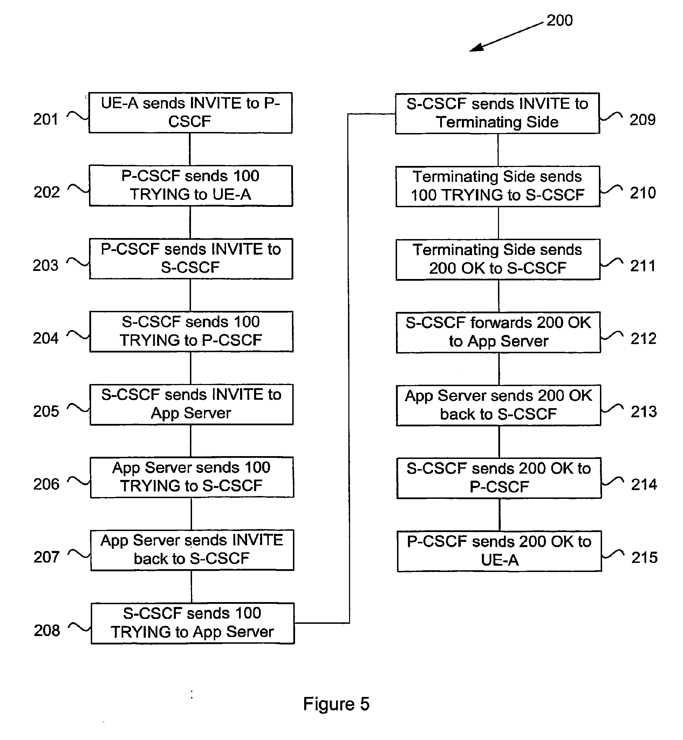

After a UE 11 has registered, it can then initiate a session. A session initiation is described with reference to Figure 4 and the flow chart 200 of Figure 5.

UE-A 11 sends an INVITE request addressed to UE-B to the P-CSCF 15 (step 201). In response, the P-CSCF 15 sends a 100 Trying back to UE-A 11 indicating that the INVITE request is being processed (step 202). The P-CSCF 15 sends the INVITE request on to the S-CSCF 17 (step 203). The S-CSCF 17 sends a 100 Trying back to the P-CSCF 15 indicating that the INVITE request is being processed (step 204). Based on the iFC for UE-A, the S-CSCF 17 sends the INVITE request to the Application Server 14 (step 205). The Application Server 14 sends a 100 Trying back to the S-CSCF 17 indicating that the INVITE request is being processed (step 206). The Application Server 14 sends the INVITE request back to the S-CSCF 17 (possibly making changes to the message if it is acting as a Back-to-back User Agent (B2B UA)) (step 207). The S-CSCF 17 sends a 100 Trying back to the Application Server 14 indicating that the INVITE request is being processed (step 208). The S-CSCF 17 sends the INVITE request on for terminating processing (step 209)(the details of the terminating processing, well known in the art, have been omitted for the sake of clarity). The terminating side 18 sends a 100 Trying back to the S-CSCF 17 indicating that the INVITE request is being processed (step 210). At step 211, the terminating side 18 sends a 200 OK to the S-CSCF 17 which sends the 200 OK to the Application Server (step 212). The Application Server 14 sends the 200 OK back to the S-CSCF 17 (step 213). The S-CSCF 17 sends the 200 OK to the P-CSCF 15 (step 214) which sends the 200 OK to UE-A 11 (step 215).

The above described sequence of messages represented a success session setup with 200 OK responses. In the case of responses other than 200 OK, the S-CSCF must decide how to proceed with the session. The information needed to decide on the handling is included as part of the iFC as defined in the user profile in accordance with the "DefaultHandling" element of the "tApplicationServer" type in the schema described above.

In an embodiment of the present invention, changes are made to the HSS and S-CSCF to facilitate enhanced handling of responses from Application Servers which are triggered as part of the iFC.

### HSS Enhancements

To support the more granular handling of responses from Application Servers, the XML schema for the user profile is updated to allow storage and transport of the extra information. This information is then passed to the S-CSCF over the Cx interface (interface between S-CSCF and HSS as defined in 3GPP).

As can been seen from the schema discussed above, there is an "Extension" element within the "tApplicationServer" type. By using this extension, additional elements can be introduced that allow additional response handling to be defined.

In one embodiment, the schema is modified to define a range of response codes to assign a response handling to. In an alternative embodiment, Regular Expressions (regex) are used to determine the response codes to assign a handling to. It will be apparent to the skilled addressee that other options are available that are within the scope of the invention and the specific examples provided below should be considered as illustrative and not restrictive.

### Code Range Solution

With this solution, a range of response codes is defined along with the handling for that range. There can be multiple instances of the element(s) containing the range definitions, which is what allows for the granular control of different response codes in different ways.

In accordance with an embodiment of the invention, the XML schema for the user profile transferred from the HSS over the Cx interface is modified. The affected sections of the XML schema are reproduced herein and will be described in detail below:

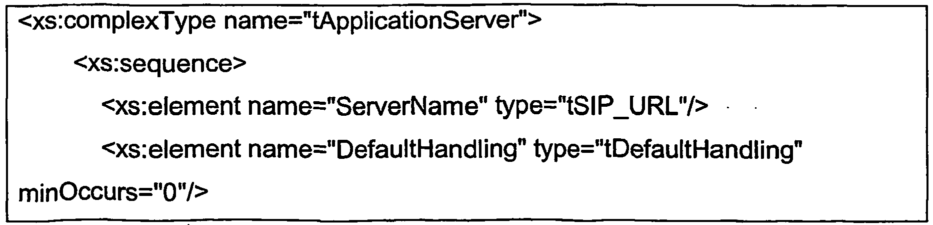

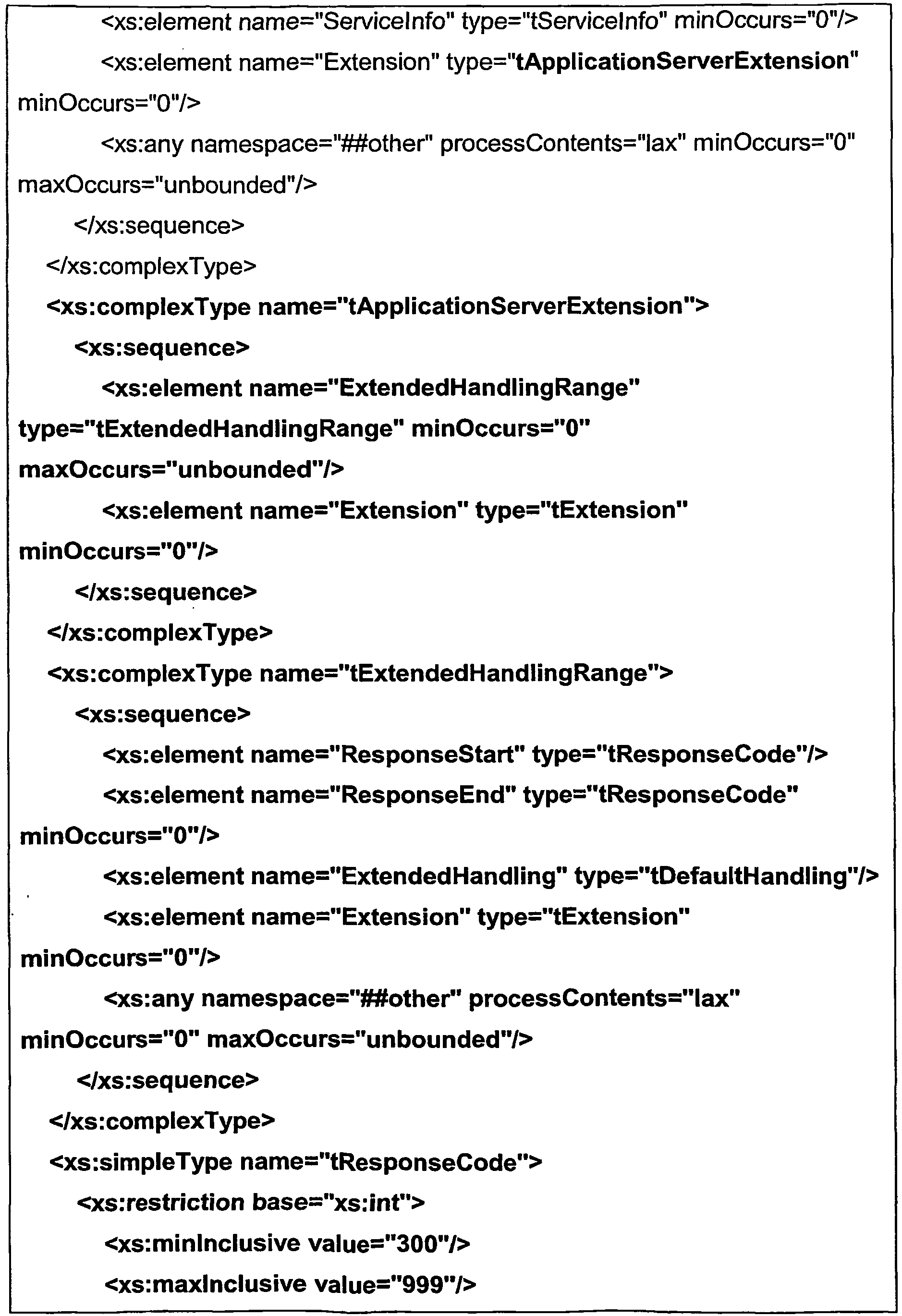

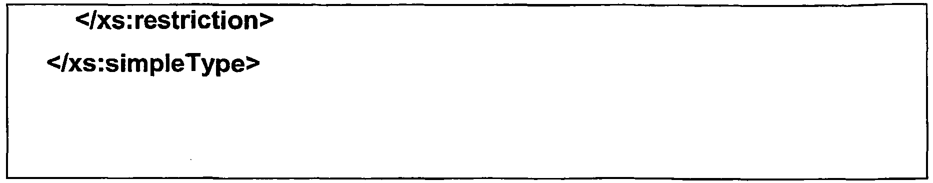

**tApplicationServerExtension**: This new type is used instead of "tExtension". Defining this new type allows for enhancements to be made to the schema in a way that is backwards compatible with the prior art schema.

**<xs:complexType name="tApplicationServerExtension">**: begins the definition of a new "tApplicationServerExtension" type. This type is a sequence which contains two elements. By using a sequence it is possible to allow this type to also be extensible in the future:

**ExtendedHandlingRange**: This element is of type "tExtendedHandlingRange" (which is also a new type). This element is a complex type which contains the range and handling information.

**Extension**: This element is added to allow the type to be extensible in the future. (This is inline with existing conventions used within the XML schema).

**<xs:complexType name="tExtendedHandlingRange">**: This begins the definition of a new "tExtendedHandlingRange" type. This type is a sequence used to define the range of response codes and the proper handling. The significant elements of the sequence are defined here:

**ResponseStart**: This element of type "tResponseCode" defines the start of the response code range that is to be defined.

**ResponseEnd**: This element of type "tResponseCode" defines the end of the response code range that is to be defined. This element is optional. If it is absent, then only a single code will be defined for handling by this instance.

**ExtendedHandling**: This element defines the handling that is to be applied to any response code that falls within the range defined. This element reuses the existing "tDefaultHandling" type of the prior art so that SESSION_CONTINUED and SESSION_TERMINATED options are also available for range based response code handling.

**Extension**: In order to make this new type extensible for future needs, the "Extension" element is included. This element makes use of the existing "tExtension" type and follows the convention used elsewhere in the schema.

**<xs:simpleType name="tResponseCode">**: This begins the definition of the new "tResponseCode" type. This type is defined as a simple Type based on an "int" and restricts the values to be between 300 and 999 inclusive. This type is used for defining the response codes to be used in the range.

The "ResponseEnd" must be greater than or equal to the "ResponseStart" element. If they are equal to each other then only the single response code will be defined for this range.

No two instances of ExtendedHandlingRange (within the same ApplicationServer) are allowed to have overlaps in their range. This would cause an ambiguity in how to handle the response code if the handling were different in the two instances. This restriction can be overcome with the use of priorities for the ranges, in a similar manner to how iFC priorities are handled.

### Regular Expressions Solution

With this solution a regular expression string is used to define the matching response codes. There can be multiple instances of the element(s) defining the regular expression, which is what allows for the granular control of different response codes in different ways.

As previously mentioned, the XML schema for the user profile is updated as used by the HSS over the Cx interface. The affected sections of the XML schema for the user profile are as follows, details of which are described in below:

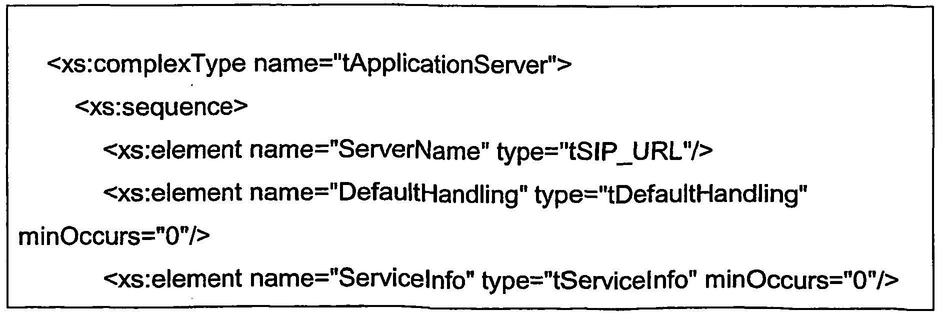

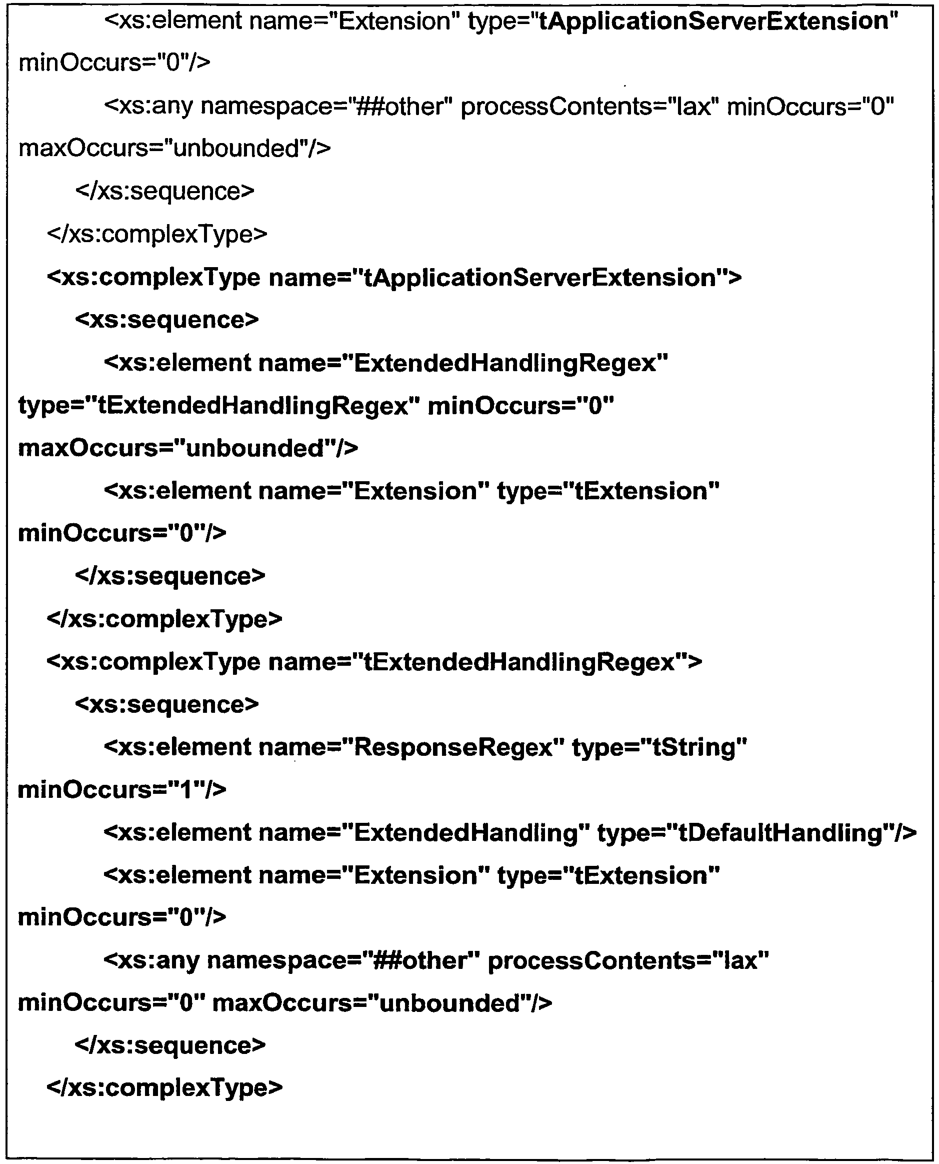

**tApplicationServerExtension**: This new type is used instead of "tExtension" that is used in the prior art schema. Defining this new type allows for enhancements to be made to the schema in a way that is backwards compatible with the prior art scheme.

**<xs:complexType name="tApplicationServerExtension">**: This begins the definition of a "tApplicationserverExtension" type. This type is a sequence which contains two elements. By using a sequence it is possible to allow this type to also be extensible in the future. The elements of the sequence are as follows :

**ExtendedHandlingRegex**: This element is of type "tExtendedHandlingRegex" (which is also a new type). This element is a complex type which contains the regular expression and handling information.

**Extension**: This element is added to allow the "tApplicationServerExtension" type to be extensible in the future, inline with existing conventions used within the XML schema.

**<xs:complexType name="tExtendedHandlingRegex">**: This begins the definition of the new "tExtendedHandlingRegex" type. This type is a sequence used to define the regular expression used for response code matching and the proper handling. The significant elements of the sequence are defined here:

**ResponseRegex**: This element is of type "tString" and defines the regular expression to be used for matching of the response code. This manner of matching is similar to that used in other aspects of the iFC, such as "RequestURI".

**ExtendedHandling**: This element defines the handling that is to be applied to any response code that falls within the range defined. This element reuses the existing "tDefaultHandling" type of the prior art schema so that SESSION_CONTINUED and SESSION_TERMINATED options are also available for range based response code handling.

**Extension**: In order to make this new type extensible for future needs, the "Extension" element is included. This element makes use of the existing "tExtension" type and follows the convention used elsewhere in the schema.

For the Regular Expressions solution, no two "ResponseRegex" expressions should cause a match of the same response code. This would cause an ambiguity in how to handle the response code if the handling were different in the two instances. This restriction may be overcome with the use of priorities for the expressions, in a similar manner to how iFC priorities are handled.

### S-CSCF Enhancements

Changes to the processing instructions performed by the processor 22 required to the S-CSCF 17 are the same, on a logical level, regardless of which solution is chosen for modifying the XML Schema for the user profile used on the Cx interface.

The processor 22 of the S-CSCF 17 receives the user profile from the HSS 13 over the Cx 21 interface during the registration process, for example as shown in step 117 in Figures 2 and 3 discussed above. In accordance with the modified schema, the additional information needed by the S-CSCF to make decisions for specific response codes is included.

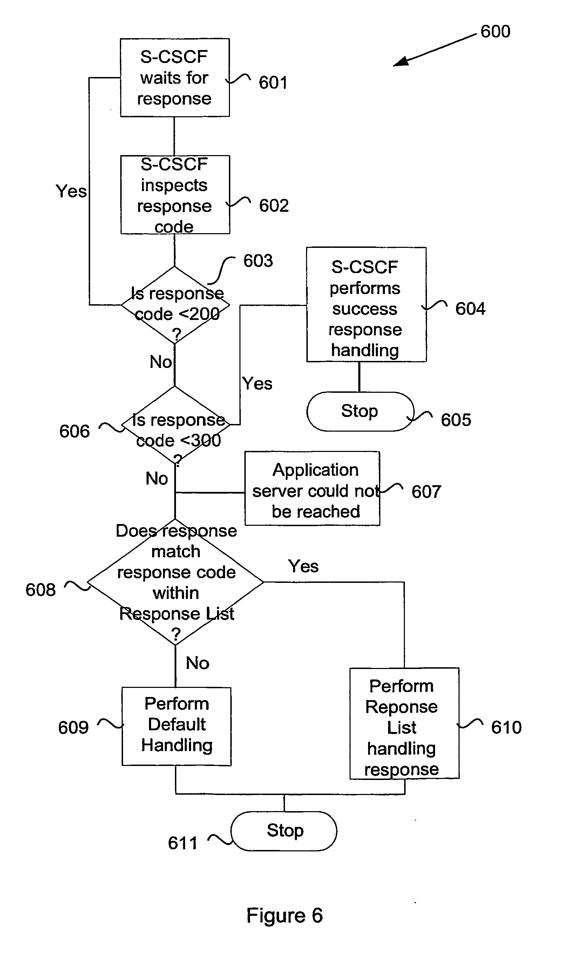

Figure 6 a shows a decision tree 600 used by the processor 22 of the S-CSCF 17 for processing response codes from the Application Server 14. This processing begins in the processor 22 after the processor 22 has forwarded a request to an Application Server 14 based on the iFC in the user profile. The user profile may be received from the HSS 13 and temporarily stored in the memory 23. The processor 22 would start these processing instructions after step 121 of the registration flow discussed above with reference to Figures 2 and 3, or after step 205 of the session initiation procedure discussed above with reference to Figures 4 and 5.

At step 601, the processor 22 of the S-CSCF 17, having sent a request to the Application Server 14, waits for a response from the Application server. The processor 22 receives a response and processes the response code (step 602). If the response code is any integer less than 200, then the processor 22 returns to waiting for a response from the Application Server 14. If the response code is between 200 and 299 (step 606), then the processor considers that a successful response has been received and so proceeds to the success response handling (604) and then stops (step 605). Response codes greater than 299 will typically indicate some form of error. A sample error 607, "Application Server could not be reached" is shown. Such an error code may have a response code and an associated response handling defined in the user profile.

At step 608, the processor 22 of the S-CSCF 17 determines if the response code is a defined error code, for example by retrieving the user profile from the memory 23 and comparing the received response code with the error codes provided in the user profile. If the "code range" method is used, then the processor 22 of the S-CSCF 17 will determine if the response code falls within one of the defined error code ranges. If the "regular expression" method is used, then the processor 22 of the S-CSCF 17 will determine if the response code matches one of the defined regular expressions. If there is a match, using either of these methods, then the S-CSCF will perform the handling (step 610) as specified in the "ExtendedHandling" element of the user profile, retrieved from memory 23, for that error code.

If there is no match, then the processor 22 of the S-CSCF 17 will perform the default handling (step 609) as specified in the "DefaultHandling" element of the user profile.

After response handling, the process is complete (step 611).

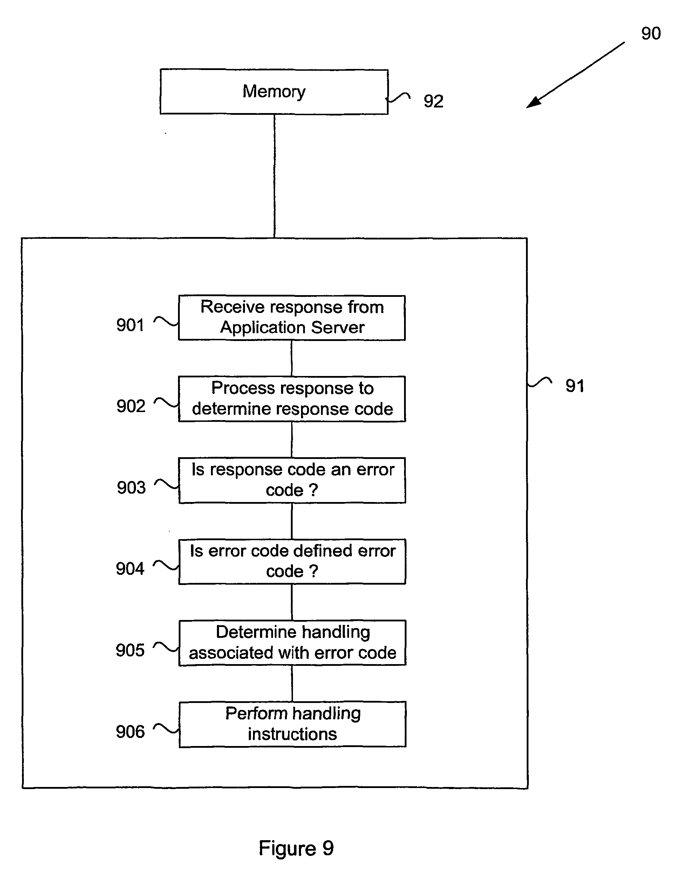

Figure 9 shows an electronic device capable of performing the method described with reference to Figure 6. The device 90 includes a processor 91 communicably coupled to a memory 92. Operating in conjunction with the memory, the processor 91 is capable of executing instructions to receive a response to a request to an application server 901, process the response to determine a response code 902, determine whether the response code corresponds to an error code 903, determine whether the error code is a defined error code 904, determine response handling instructions associated with the error code 905; and perform the response handling instructions 906.

The electronic device 90 can also comprise any number of additional components such as a graphics card, a transceiver, a power supply, and the like. In addition, the device 90 may communicate through wired or wireless means.

The user profile has been defined in 3GPP using XML to allow for extensibility that would allow for backwards compatibility. The embodiments described herein take advantage of that extensibility and retain backwards compatibility.

In the case where the S-CSCF 17 supports enhanced response handling as described herein but the HSS does not, the user profile stored on the HSS will not contain the "Extension" defined by the "tApplicationServerExtension" type. Therefore, the additional information needed by the S-CSCF to perform enhanced response code handling will not be present. However, the "DefaultHandling" element will still be present in the user profile and this can be acted upon by the S-CSCF 17. Having an S-CSCF that already supports this invention will make it easier to include the feature later when the HSS does gain support.

In the case where the HSS 13 supports the extended user profile but the S-CSCF 17 does not yet have support, the user profile stored on the HSS 13 will contain the "Extension" defined by the "tApplicationServerExtension" type. This information will be passed to the S-CSCF 17 over the Cx interface when the user profile is transferred during the registration process. Since the S-CSCF does not recognize this information and because it was defined as an extension in the original schema, the S-CSCF will simply ignore this extra information. In this case, the S-CSCF will simply use the "DefaultHandling" element that will still be present in the user profile. Once the S-CSCF 17 is upgraded to use this additional information it will already be available within the user profile on the HSS 13.

The above described embodiments provide two examples for extending the user profile. Whilst other embodiments are possible, the most desirable embodiment will be dependent on the type of implementation to be deployed. For example, Regular Expressions are often considered expensive to implement. However, there will already be support for regular expressions on the platform due to other elements within the schema using them. Defining a range will allow for simple integer comparisons to be made. However, this solution may require a much larger number of combinations to be defined (and thus stored and transferred) to determine the handling for all of the relevant response codes.

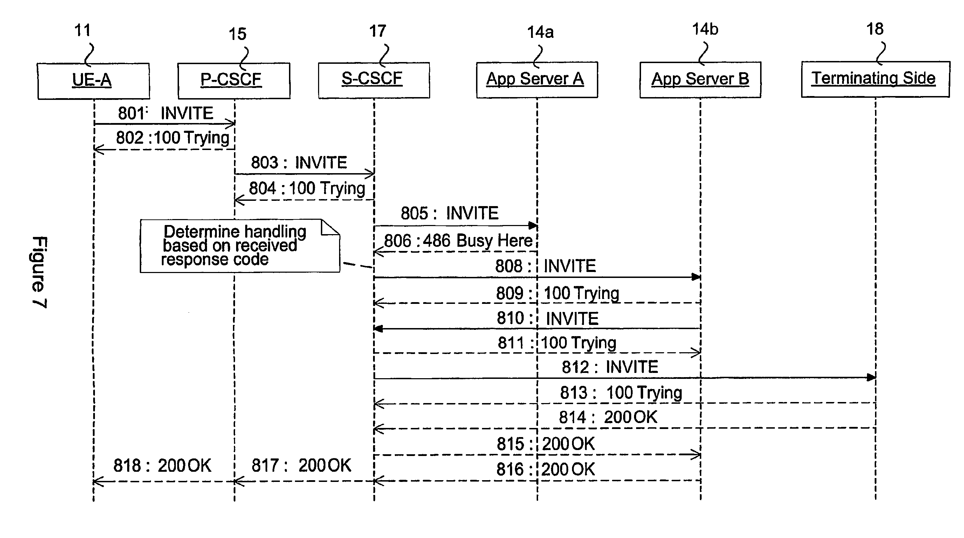

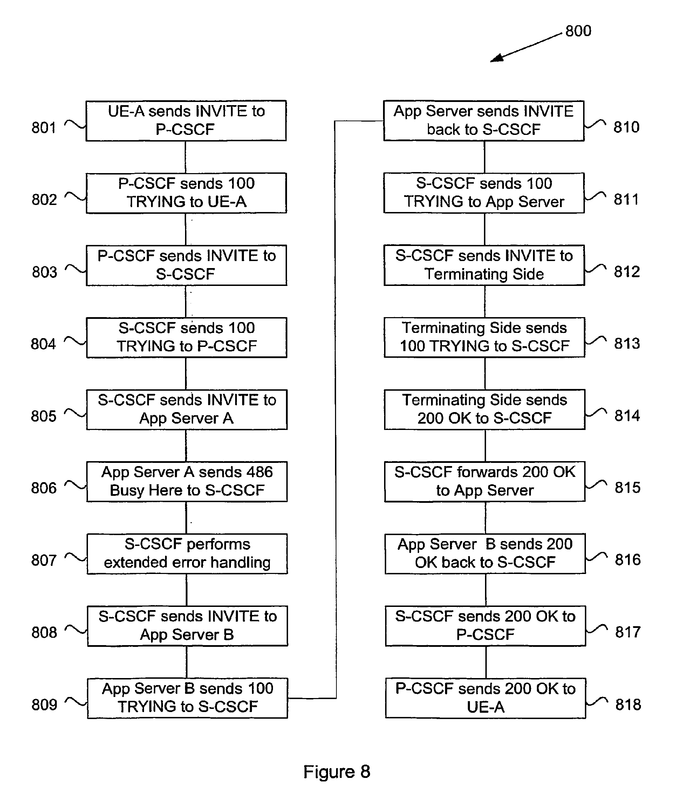

A specific working example of an embodiment of the invention will now be described with Reference to Figure 7, the flow diagram 800 of Figure 8, and to the following user profile XML document. The example is based on the code range solution described above. The relevant parts of the user profile are as follows :

```
 <?xml version="1.0" encoding="UTF-8"?>
 <IMSSubscription xmlns:xsi="http://www.w3.org/2001/XMLSchema-instance"
 xsi:noNamespaceSchemaLocation="CxDataType_range.xsd">
     <PrivateID>IMPI1@homedomain.com</PrivateID>
     <ServiceProfile>
         <PublicIdentity>
             <BarringIndication>1</BarringIndication>
             <Identity> sip:IMPU1@homedomain.com </Identity>
         </PublicIdentity>
         <InitialFilterCriteria>
              <Priority>0</Priority>
              <TriggerPoint>
                  <ConditionTypeCNF>1</ConditionTypeCNF>
                  <SPT>
                       <ConditionNegated>0</ConditionNegated>
                       <Group>0</Group>
                       <Method>INVITE</Method>
                  </SPT>
              </TriggerPoint>
              <ApplicationServer>
     <ServerName>sip:AS1@homedomain.com</ServerName>
                  <DefaultHandling>1</DefaultHandling>
         <Extension>
                   <ExtendedHandlingRange>
                       <ResponseStart>486</ResponseStart>
                       <ExtendedHandling>0</ExtendedHandling>
                   </ExtendedHandlingRange>
         <Extension>
             </ApplicationServer>
         </InitialFilterCriteria>
         <InitialFilterCriteria>
              <Priority>1</Priority>
              <TriggerPoint>
                  <ConditionTypeCNF>1</ConditionTypeCNF>
                  <SPT>
                       <ConditionNegated>0</ConditionNegated>
                       <Group>0</Group>
                       <Method>INVITE</Method>
                  </SPT>
              </TriggerPoint>
              <ApplicationServer>
    <ServerName>sip:AS2@homedomain.com</ServerName>
                  <DefaultHandling>1</DefaultHandling>
              </ApplicationServer>
         </InitialFilterCriteria>
    </ServiceProfile>
 </IMSSubscription>
```

In this example, the user is identified by the SIP IMPI1@homedomain.com. The <ApplicationServer> type defines the error handling for the Application Server AS1@homedomain.com. Within this type definition, the Default Handling is defined as follows: <DefaultHandling>1</DefaultHandling>. This definition corresponds to SESSION_TERMINATED. In other words, the default handling is to terminate the session if an error occurs based on this trigger. However, the profile also defines an Extended Handling Range as follows:

```
 <ExtendedHandlingRange>
             <ResponseStart>486</ResponseStart>
             <ExtendedHandling>0</ExtendedHandling>
 </ExtendedHandlingRange>
```

That is, the example adds specific handling for the 486 Busy Here SIP error code. The handling is set to SESSION_CONTINUED (<ExtendedHandling>0</ExtendedHandling>) which means that if a 486 error code is received then the filter matching should continue for the remaining filter criteria as if no error had occurred.

With reference now to Figures 7 and 8, there will be described a call flow based on the example user profile in which the user identity UE-A corresponds to the identity IMPI1 and IMPU1 in the XML Document above, Application Server A corresponds to AS1@homedomain.com and Application Server B corresponds to AS2@homedomain.com. In this call flow, a failure occurs at the 1^{st} application server, triggering the additional rules provided by the enhanced user profile.

At step 801, the user UE-A 11 sends an INVITE request addressed to UE-B to the P-CSCF 15. The P-CSCF sends a 100 Trying back to UE-A 11 indicating that the INVITE request is being processed (step 802). The P-CSCF 15 sends the INVITE request on to the S-CSCF 17 (step 803) which responds with a 100 Trying back to the P-CSCF 15 (step 804) indicating that the INVITE request is being processed. Based on the iFC for UE-A, the S-CSCF 17 sends the INVITE request to App Server A 14a (step 805). App Server A 14a sends a 486 Busy Here response back to the S-CSCF 17 indicating that it is not able to process the request because of a busy condition (step 806). Upon receipt of this error message, the processor of the S-CSCF 17 evaluates the additional checks offered by this invention (step 807). According to the <ExtendedHandlingRange> definition for this Application Server, a 486 response shall use SESSION_CONTINUED. Therefore, the S-CSCF 17 will continue with iFC evaluation. Based on this evaluation, the S-CSCF forwards the INVITE request to App Server B 14b (step 808). App Server B sends a 100 Trying back to the S-CSCF 17 indicating that the INVITE request is being processed (809). The App Server B 14b sends the INVITE request back to the S-CSCF 17 (possibly making changes to the message if it is acting as a Back-to-Back User Agent (B2B UA)) (step 810). The S-CSCF 17 sends a 100 Trying back to the App Server B indicating that the INVITE request is being processed (step 811). At step 812, the S-CSCF 17 sends the INVITE request on for terminating processing (the details of the terminating processing have been omitted for simplicity sake). The terminating side sends a 100 Trying back to the S-CSCF 17 indicating that the INVITE request is being processed (step 813). At step 814, the terminating side sends a 200 OK to the S-CSCF 17 which then sends the 200 OK to App Server B 14b (step 815). App Server B 14b sends the 200 OK back to the S-CSCF 17 (step 816), which forwards the 200 OK to the P-CSCF 15 (step 817) and thence on to the UE-A 11 (step 818).

The preceding example provides a use case in accordance with an embodiment of the invention. In Step 807 of the call flow, the S-CSCF uses the <ExtendedHandlingRange> additions to provide specific handling for the 486 Busy Here response. Without this enhancement, the S-CSCF would have used the <DefaultHandling> procedures instead and would have been forced to terminate the session.

The embodiments described herein have advantage over prior art systems in that the operators implementing an IMS system gain additional flexibility in how they handle responses from application servers. This added flexibility allows them to treat distinct response codes differently and thus allows them to better handle responses from an end-user perspective depending on the nature of the response.

Although embodiments of the present invention have been illustrated in the accompanied drawings and described in the foregoing description, it will be understood that the invention is not limited to the embodiments disclosed, but is capable of numerous rearrangements, modifications, and substitutions without departing from the spirit of the invention as set forth and defined by the following claims. For example, the capabilities of the invention can be performed fully and/or partially by one or more of the blocks, modules, processors or memories. Also, these capabilities may be performed in the current manner or in a distributed manner and on, or via, any device able to provide and/or receive information. Further, although depicted in a particular manner, various modules or blocks may be repositioned without departing from the scope of the current invention. Still further, although depicted in a particular manner, a greater or lesser number of modules and connections can be utilized with the present invention in order to accomplish the present invention, to provide additional known features to the present invention, and/or to make the present invention more efficient. Also, the information sent between various modules can be sent between the modules via at least one of a data network, the Internet, an Internet Protocol network, a wireless source, and a wired source and via a plurality of protocols.

## Claims

1. An Internet Protocol Multimedia Subsystem IMS comprising:
at least one Home Subscriber Server (13), at least one application server (14) and at least one Call Session Control Function (12);
wherein said at least one Home Subscriber Server (13) is arranged to store at least one user profile defining:-
at least one error code; and
at least one error handling associated with said at least one error code; and
wherein said at least one error code and said at least one error handling are defined in an extended tApplicationServer type of a user profile schema;
wherein said at least one Call Session Control Function (12) is arranged to retrieve said user profile from said Home Subscriber Server (13);
wherein said at least one Call Session Control Function (12) is arranged to receive a response to a request to said at least one application server (14);
wherein said Call Session Control Function (12) is arranged to process said response to determine a response code;
wherein said Call Session Control Function (12) is arranged to determine if said response code is an error code;
wherein if said error code matches an error code defined in said user profile, the Call Session Control Function (12) is arranged to perform the error handling associated with said matching error code.

2. The Internet Protocol Multimedia Subsystem according to claim 1 wherein said user profile further defines a default error handling.

3. The Internet Protocol Multimedia Subsystem according to claim 1 wherein said user profile defines one or more ranges of error codes and an error handling associated with each of said one or more ranges.

4. The Internet Protocol Multimedia Subsystem according to claim 1 wherein said user profile defines one or more regular expressions, each regular expression defining an error handling and at least one error code associated with said error handling.

5. The Internet Protocol Multimedia Subsystem according to claim 1 wherein if said error code does not match an error code defined in said user profile, the Call Session Control Function (12) performs a default error handling.

6. A method of managing application server responses in an internet protocol multimedia subsystem, the method comprising:
receiving a user profile from a home subscriber server(13);
sending a request to an application server (14);
receiving a response to said request, said response identifying a response code;
comparing the received response code with one or more response codes defined in said user profile;
determining response handling instructions associated with a defined response code matching said received response code; and
performing said response handling instructions; and
wherein the at least one response code and the associated response handling are stored in an extended tApplicationServer type of a user profile schema.

7. The method according to claim 6 further comprising receiving an application request from a user, determining an identity of the user from the application request, and receiving the user profile dependent on the identity of the user.

8. The method according to claim 6 further comprising determining default handling instructions if said received response code does not match a response code defined in said user profile.

9. The method according to claim 6 further comprising defining at least one response code, defining at least one response handling, and associating said at least one response handling with said at least one response code.

10. The method according to claim 9 further comprising defining at least one plurality of response codes and associating said plurality of response codes with said at least one response handling.

11. The method according to claim 10 wherein said at least one plurality of response codes is a range of response codes.

12. The method according to claim 10 wherein said definition includes at least one regular expression, each regular expression defining a response handling and at least one response code associated with said response handling.

13. The method according to claim 9 further comprising storing at least one response code and at least one associated response handling in at least one user profile.

## Patentansprüche

1. Internetprotokoll-Multimedia-Untersystem, IMS, umfassend:
wenigstens einen Home-Subscriber-Server (13), wenigstens einen Applikationsserver (14) und wenigstens eine Anrufssitzungssteuerungsfunktion (12),
wobei der wenigstens eine Home-Subscriber-Server (13) eingerichtet ist, wenigstens ein Benutzerprofil zu speichern, das definiert:
wenigstens einen Fehlercode; und
wenigstens eine Fehlerhandhabung, die mit dem wenigstens einen Fehlercode assoziiert ist; und
wobei der wenigstens eine Fehlercode und die wenigstens eine Fehlerhandhabung in einem erweiterten tApplikationsserver-Typ eines Benutzerprofilschemas definiert sind;
wobei die wenigstens eine Anrufssitzungssteuerungsfunktion (12) eingerichtet ist, das Benutzerprofil von dem Home-Subscriber-Server (13) abzurufen;
wobei die wenigstens eine Anrufssitzungssteuerungsfunktion (12) eingerichtet ist, eine Antwort auf eine Anfrage an den wenigstens einen Applikationsserver (14) zu empfangen;
wobei die Anrufssitzungssteuerungsfunktion (12) eingerichtet ist, die Antwort zu verarbeiten, um einen Antwortcode zu bestimmen;
wobei die Anrufssitzungssteuerungsfunktion (12) eingerichtet ist, zu bestimmen, ob der Antwortcode ein Fehlercode ist;
wobei, falls der Fehlercode mit einem Fehlercode übereinstimmt, der in dem Benutzerprofil definiert ist, die Anrufssitzungssteuerungsfunktion (12) eingerichtet ist, die Fehlerhandhabung durchzuführen, die mit dem übereinstimmenden Fehlercode assoziiert ist.

2. Internetprotokoll-Multimedia-Untersystem nach Anspruch 1, wobei das Benutzerprofil ferner eine Standardfehlerhandhabung definiert.

3. Internetprotokoll-Multimedia-Untersystem nach Anspruch 1, wobei das Benutzerprofil einen oder mehr Bereiche von Fehlercodes definiert und eine Fehlerhandhabung, die mit jedem der einen oder mehr Bereiche assoziiert ist.

4. Internetprotokoll-Multimedia-Untersystem nach Anspruch 1, wobei das Benutzerprofil einen oder mehr reguläre Ausdrücke definiert, wobei jeder reguläre Ausdruck eine Fehlerhandhabung und wenigstens einen Fehlercode definiert, der mit der Fehlerhandhabung assoziiert ist.

5. Internetprotokoll-Multimedia-Untersystem nach Anspruch 1, wobei, falls der Fehlercode nicht mit einem Fehlercode übereinstimmt, der in dem Benutzerprofil definiert ist, die Anrufssitzungssteuerungsfunktion (12) eine Standard-Fehlerhandhabung durchführt.

6. Verfahren zum Verwalten von Applikationsserver-Antworten in einem Internetprotokoll-Multimedia-Untersystem, wobei das Verfahren umfasst:
ein Empfangen eines Benutzerprofils von einem Home-Subscriber-Server (13);
ein Senden einer Anfrage an einen Applikationsserver (14);
ein Empfangen einer Antwort auf die Anfrage, wobei die Antwort einen Antwortcode identifiziert;
ein Vergleichen des empfangenen Antwortcodes mit einem oder mehr Antwortcodes, die in dem Benutzerprofil definiert sind;
ein Bestimmen von Antwort-Handhabungsinstruktionen, die mit einem definierten Antwortcode assoziiert sind, der mit dem empfangenen Antwortcode übereinstimmt; und
ein Durchführen der Antwort-Handhabungsinstruktionen; und
wobei der wenigstens eine Antwortcode und die assoziierte Antworthandhabung in einem erweiterten tApplikationsserver-Typ eines Benutzerprofilschemas gespeichert sind.

7. Verfahren nach Anspruch 6, ferner umfassend ein Empfangen einer Applikationsanfrage von einem Benutzer, ein Bestimmen einer Identität des Benutzers von der Applikationsanfrage, und ein Empfangen des Benutzerprofils in Abhängigkeit von der Identität des Benutzers.

8. Verfahren nach Anspruch 6, ferner umfassend ein Bestimmen von Standard-Handhabungsinstruktionen, falls der empfangene Antwortcode nicht mit einem Antwortcode übereinstimmt, der in dem Benutzerprofil definiert ist.

9. Verfahren nach Anspruch 6, ferner umfassend ein Definieren von wenigstens einem Antwortcode, ein Definieren von wenigstens einer Antworthandhabung und ein Assoziieren von der wenigstens einen Antworthandhabung mit dem wenigstens einen Antwortcode.

10. Verfahren nach Anspruch 9, ferner umfassend ein Definieren von wenigstens einer Vielzahl von Antwortcodes und ein Assoziieren der Vielzahl von Antwortcodes mit der wenigstens einen Antworthandhabung.

11. Verfahren nach Anspruch 10, wobei die wenigstens eine Vielzahl von Antwortcodes ein Bereich von Antwortcodes ist.

12. Verfahren nach Anspruch 10, wobei die Definition wenigstens einen regulären Ausdruck umfasst, wobei jeder reguläre Ausdruck eine Antworthandhabung definiert und wobei wenigstens ein Antwortcode mit der Antworthandhabung assoziiert ist.

13. Verfahren nach Anspruch 9, ferner umfassend ein Speichern von wenigstens einem Antwortcode und wenigstens einer assoziierten Antworthandhabung in wenigstens einem Benutzerprofil.

## Revendications

1. Sous-système multimédia sous protocole internet, IMS, comprenant :
au moins un serveur d'abonnés de rattachement (13), au moins un serveur d'applications (14) et au moins une fonction de commande de session d'appel (12) ;
ledit au moins un serveur d'abonnés de rattachement (13) étant conçu pour stocker au moins un profil d'utilisateur qui définit :
au moins un code d'erreur ; et
au moins un traitement d'erreur associé audit au moins un code d'erreur ; et
ledit au moins un code d'erreur et ledit au moins un traitement d'erreur étant définis sous la forme d'un type tApplicationServer étendu d'un schéma de profil d'utilisateur ;
ladite au moins une fonction de commande de session d'appel (12) étant conçue pour obtenir ledit profil d'utilisateur auprès dudit serveur d'abonnés de rattachement (13) ;
ladite au moins une fonction de commande de session d'appel (12) étant conçue pour recevoir une réponse à une demande adressée audit au moins un serveur d'applications (14) ;
ladite fonction de commande de session d'appel (12) étant conçue pour traiter ladite réponse afin de déterminer un code de réponse ;
ladite fonction de commande de session d'appel (12) étant conçue pour déterminer si ledit code de réponse est un code d'erreur ;
ladite fonction de commande de session d'appel (12), si ledit code d'erreur correspond à un code d'erreur défini dans ledit profil d'utilisateur, étant conçue pour exécuter le traitement d'erreur associé audit code d'erreur correspondant.

2. Sous-système multimédia sous protocole internet selon la revendication 1, dans lequel ledit profil d'utilisateur définit en outre un traitement d'erreur par défaut.

3. Sous-système multimédia sous protocole internet selon la revendication 1, dans lequel ledit profil d'utilisateur définit une ou plusieurs plages de codes d'erreur et un traitement d'erreur associé à chacune desdites une ou plusieurs plages.

4. Sous-système multimédia sous protocole internet selon la revendication 1, dans lequel ledit profil d'utilisateur définit une ou plusieurs expressions régulières, chacune des expressions régulières définissant un traitement d'erreur et au moins un code d'erreur associé audit traitement d'erreur.

5. Sous-système multimédia sous protocole internet selon la revendication 1, dans lequel, si ledit code d'erreur ne correspond pas à un code d'erreur défini dans ledit profil d'utilisateur, la fonction de commande de session d'appel (12) exécute un traitement d'erreur par défaut.

6. Procédé de gestion des réponses de serveurs d'applications dans un sous-système multimédia sous protocole internet, le procédé comprenant les étapes consistant à :
recevoir un profil d'utilisateur d'un serveur d'abonnés de rattachement (13) ;
envoyer une demande à un serveur d'applications (14) ;
recevoir une réponse à ladite demande, ladite réponse identifiant un code de réponse ;
comparer le code de réponse reçu avec un ou plusieurs codes de réponse définis dans ledit profil d'utilisateur ;
déterminer des instructions de traitement de la réponse associées à un code de réponse défini qui correspond audit code de réponse reçu ; et
exécuter lesdites instructions de traitement de la réponse ; et
dans lequel ledit au moins un code de réponse et le traitement de réponse associé sont stockés sous la forme d'un type tApplicationServer étendu d'un schéma de profil d'utilisateur.

7. Procédé selon la revendication 6, comprenant en outre les étapes consistant à recevoir une demande d'application d'un utilisateur, à déterminer l'identité de l'utilisateur à partir de la demande d'application, et à recevoir le profil d'utilisateur en fonction de l'identité de l'utilisateur.

8. Procédé selon la revendication 6, comprenant en outre l'étape consistant à déterminer des instructions de traitement par défaut si ledit code de réponse reçu ne correspond pas à un code de réponse défini dans ledit profil d'utilisateur.

9. Procédé selon la revendication 6, comprenant en outre les étapes consistant à définir au moins un code de réponse, à définir au moins un traitement de réponse, et à associer ledit au moins un traitement de réponse avec ledit au moins un code de réponse.

10. Procédé selon la revendication 9, comprenant en outre les étapes consistant à définir au moins une pluralité de codes de réponse, et à associer ladite pluralité de codes de réponse avec ledit au moins un traitement de réponse.

11. Procédé selon la revendication 10, dans lequel ladite au moins une pluralité de codes de réponse forme une plage de codes de réponse.

12. Procédé selon la revendication 10, dans lequel ladite définition comprend au moins une expression régulière, chaque expression régulière définissant un traitement de réponse et au moins un code de réponse associé audit traitement de réponse.

13. Procédé selon la revendication 9, comprenant en outre l'étape consistant à stocker au moins un code de réponse et au moins un traitement de réponse associé dans au moins un profil d'utilisateur.
